# EUROPEAN PATENT APPLICATION

(11) **EP 1 213 176 A1**
(43) Date of publication of application: **12.06.2002**
(21) Application number: 01310241.3
(22) Date of filing: 07.12.2001
(51) Int. Cl.: B60P 1/44

(54) **Lifting apparatus**

(30) Priority: 09.12.2000 GB 0030135
(71) Applicant: Ross & Bonnyman Limited, Forfar, Angus DD8 3DG (GB)
(72) Inventor: Gardiner, Iain, Dundee DD5 2UF (GB); Reavley, John Stephenson, Dundee, DD5 1DN (GB)
(74) Representative: Allan, Jamie

(57) **Abstract**

The present invention is particularly suited to tail lifts that include a platform (10) having a pivotal portion (16) that can be moved between an extended position and a folded position. The invention relates to a biasing mechanism (50) that includes a bias means (70) and an arm (52). The bias means (70) can be energised by relative movement between the platform (10) and the pivotal portion (16), and generates a bias force that is transmitted to one of the platform (10) and the pivotal portion (16). The bias force aids a user in lifting or otherwise moving the pivotal portion (16).

## Description

The present invention relates to lifting apparatus, and particularly, but not exclusively, to tail lifts mounted on vehicles. Tail lifts are typically mounted at the rear of the vehicle to enable the effective transfer of heavy objects between the ground and the vehicle. Although called a tail lift, such apparatus can be located at the front or side of the vehicle instead of the rear, but it is conventional for tail lifts to be located at the rear of e.g. the bed of the vehicle.

Conventional designs of tail lifts generally incorporate a pair of spaced-apart columns at or near a rear opening of the vehicle loadspace, and a platform that is pivotally mounted e.g. *via* hinges at its base to the vehicle. The platform can be pivoted about the hinges to a vertical configuration in which it extends across the opening, or can be placed in a horizontal configuration to be raised and lowered relative to the columns for operation as a tail lift. The platform is typically attached to runners that are slidable on the columns and can typically be powered by cables and/or hydraulic rams in order to move the runners along a rear face of the columns.

It is often the case that vehicles provided with tail lifts are loaded and unloaded at raised loading bays. It will be appreciated that at least a portion of the tail lift (e.g. the platform) obscures the door of the vehicle that allows access to the loadspace (e.g. the floor of the vehicle). Thus, the platform is generally lowered towards the ground whilst in its vertical configuration so that it does not obstruct the opening to the floor of the vehicle.

However, it will be appreciated that the depth of the platform (that is the vertical height of the platform when in its vertical configuration) may be greater than the height from the ground to the floor of the vehicle. Thus, even when the platform is lowered to the ground in its vertical configuration, an upper portion thereof can at least partially obscure the opening to the floor of the vehicle.

It is known to have a platform that has a pivotal portion at its upper end so that the pivotal portion can be folded over to lie parallel with the platform. The pivotal portion thus folds out of the way against the platform and allows access to the bed of the vehicle. However, the pivotal portion is typically very heavy and manually lifting this can be difficult.

According to a first aspect of the present invention there is provided a biasing mechanism for a hinge that pivotally couples two members, the biasing mechanism comprising a bias means that can be energised upon relative movement between the members, the biasing mechanism including an arm that transfers a bias force of the bias means to one of the members.

According to a second aspect of the present invention there is provided lifting apparatus including a platform, the platform having a pivotal portion that is pivotally coupled to the platform *via* a hinge, the apparatus including a biasing mechanism comprising a bias means that can be energised upon relative movement between the platform and the pivotal portion, the biasing mechanism including an arm that transfers a bias force of the bias means to one of the platform and the pivotal portion.

The bias means typically comprises a torsion bar that can be energised upon relative movement between the pivotal portion and the platform.

The bias means typically includes an arm that transfers a bias force of the torsion bar to one of the platform and the pivotal portion.

According to a third aspect of the present invention there is provided lifting apparatus including a platform, the platform having a pivotal portion that is pivotally coupled to the platform via a hinge, the apparatus including a biasing mechanism comprising an arm that transmits a bias force between the platform and the pivotal portion.

In the third aspect, the biasing mechanism typically includes a bias means that can be energised upon relative movement between the pivotal portion and the platform. The bias means typically transfers the bias force to the pivotal portion.

The rotational axis of the hinge is typically above an upper surface of the platform, and thus the bias means is typically located on an axis that is spaced-apart from a rotational axis of the hinge. The axis is typically below the rotational axis of the hinge.

The bias means is preferably a torsion bar, but can be a coiled spring or the like. A first end of the torsion bar typically rotates with a pivot pin that pivotally couples the arm to one of the members, whilst a second end is preferably rigidly held in place. The second end may be held in a bracket. The pivot pin is typically located at or near the axis that is spaced-apart from the rotational axis of the hinge. A first end of the arm is typically provided with an aperture through which the pivot pin is located.

The biasing mechanism typically includes a guide pin located at a second end of the arm. The guide pin typically engages a guide slot that is located on the other member. The guide pin is preferably provided with a roller bearing that engages the guide slot. The guide pin is also preferably provided with an enlarged head that engages a retaining slot. The guide slot and the retaining slot typically lie along the same axis, and are preferably superimposed on one another. The guide slot is preferably superimposed on the retaining slot. A width of the retaining slot is preferably greater than a width of the guide slot so that a lip is formed therebetween that retains the enlarged head of the guide pin in the retaining slot. Thus, the guide pin is retained in the guide slot by the lip.

In the second and third aspects, a first end of the torsion bar typically rotates with a pivot pin that pivotally couples the arm to one of the platform and the pivotal portion, whilst a second end is preferably rigidly held in place. The arm is typically pivotally coupled to the platform (e.g. by the pivot pin). The second end of the torsion bar is typically rigidly held in a bracket. The guide pin typically engages a guide slot that is located on the pivotal portion. In an alternative embodiment, the guide pin may be located on the pivotal portion and the guide slot located on the arm. The guide pin is preferably provided with a roller bearing that engages the guide slot. The guide pin is also preferably provided with an enlarged head that engages a retaining slot. The guide slot and the retaining slot typically lie along the same axis, and are preferably superimposed on one another. The guide slot is preferably superimposed on the retaining slot. A width of the retaining slot is preferably greater than a width of the guide slot so that a lip is formed therebetween that retains the enlarged head of the guide pin in the retaining slot. Thus, the guide pin is retained in the guide slot by the lip.

The bias force of the bias mechanism can typically be varied, for example by varying the length of the torsion bar or the cross-sectional area of the bar. The length of the bar can be varied by changing a distance between the first end of the bar that is located in the pivot pin and the second end of the bar that is rigidly held. For example, this can be achieved by sliding the bracket that rigidly holds the second end of the torsion bar towards and away from the pivot pin. This varies the effective length of the bar; that is to say it changes the length of the bar between the first end that is located in the pivot pin and the second end that is held rigidly in the bracket. Sliding the bracket towards the pin typically increases the bias force, whereas sliding the bracket away from the pin typically decreases the bias force. The cross-sectional area of the bar is typically varied by changing the bar for one of a different cross-sectional area.

The torsion bar is typically of a square cross-section, but other cross-sectional shapes (e.g. circular, triangular etc) may also be used.

The arm typically transfers the bias force to the pivotal portion.

An end of the torsion bar is preferably located in the pivot pin when the pivotal portion is located at a neutral position with respect to the platform. The neutral position is typically where the pivotal portion is perpendicular to the platform. When the pivotal portion is pivoted away from the neutral position to either lie parallel with the platform or extend longitudinally therefrom, the torsion bar is twisted along its longitudinal axis. The twisting of the torsion bar provides a bias force that tends to urge the pivotal portion towards the neutral position. The bias force thus makes the pivotal portion easier to lift towards the neutral position, as it effectively reduces the weight of the pivotal portion, thus making it easier to lift, because of the bias force provided by the torsion bar.

The pivotal portion and/or the platform is typically provided with a latching mechanism. The latching mechanism typically latches the pivotal portion to the platform when the pivotal portion is folded against the platform.

Embodiments of the present invention shall now be described, by way of example only, with reference to the accompanying drawings, in which:-
Fig. 1 is a plan view of a tail lift apparatus that includes a platform and a pivotal portion that can be attached to the platform;
Fig. 2 is a side elevation of the platform and pivotal portion of Fig. 1;
Fig. 3 is a cross-sectional elevation of a portion of the apparatus of Figs 1 and 2 that is provided with a first embodiment of a biasing mechanism according to the present invention;
Fig. 4 is an enlarged view of part of the biasing mechanism of Fig. 3;
Figs 5a to 5c are side elevations of the platform and pivotal portion of Figs 1 and 2 that show the stages of movement of the pivotal portion;
Fig. 6 is a side elevation of a portion of the platform of Figs 1 and 2;
Fig. 7 is a series of views of components of the biasing mechanism of Figs 3 and 4;
Fig. 8 is a side elevation of the platform and pivotal portion of Figs 1 and 2 that shows the stages of movement of the pivotal portion;
Fig. 9 is a side elevation of the apparatus of Figs 1 and 2 that is provided with a second embodiment of a biasing mechanism;
Fig. 10 is an enlarged view of a portion of the platform and pivotal portion of Fig. 8;
Fig. 11 is a side elevation of the apparatus of Figs 1 and 2 that is provided with a fourth embodiment of a biasing mechanism;
Fig. 12 is a side elevation of the platform and pivotal portion of Figs 1 and 2 showing the stages of movement of the pivotal portion;
Fig. 13 is a side elevation of the apparatus of Figs 1 and 2 that is provided with a fifth embodiment of a biasing mechanism;
Figs 14a to 14c are side elevations of the platform and pivotal portion of Figs 1 and 2;
Fig. 15 is an isometric view of a sixth embodiment of a biasing mechanism provided on a car lift;
Fig. 16 is a side elevation of the car lift of Fig. 15 with a pivotal portion in a folded position;
Fig. 17 is a side elevation of the car lift of Figs 15 and 16 with the pivotal portion in an extended position; and
Fig. 18 is an end elevation of the car lift of Figs 15 to 17.

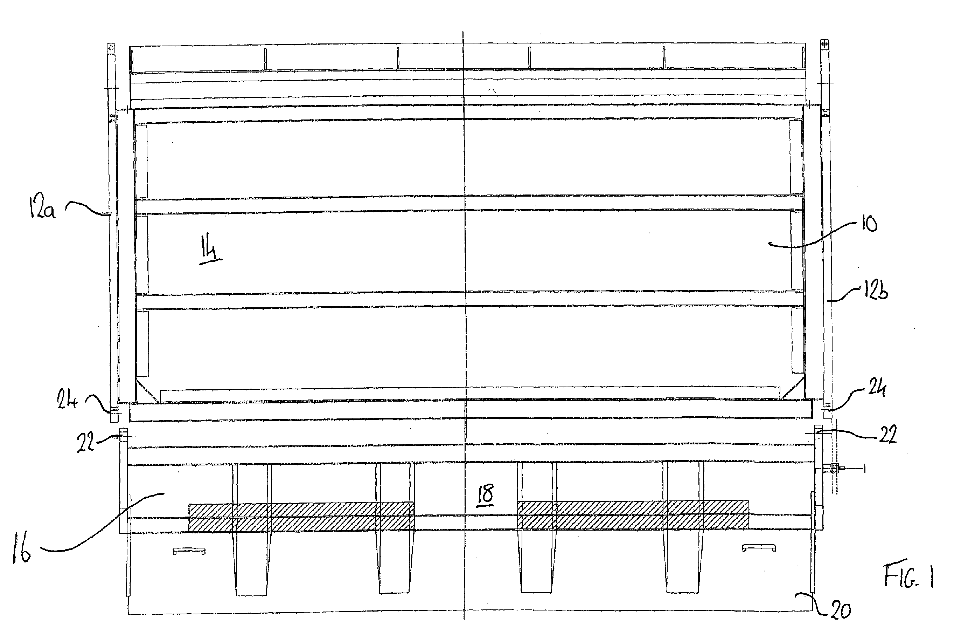

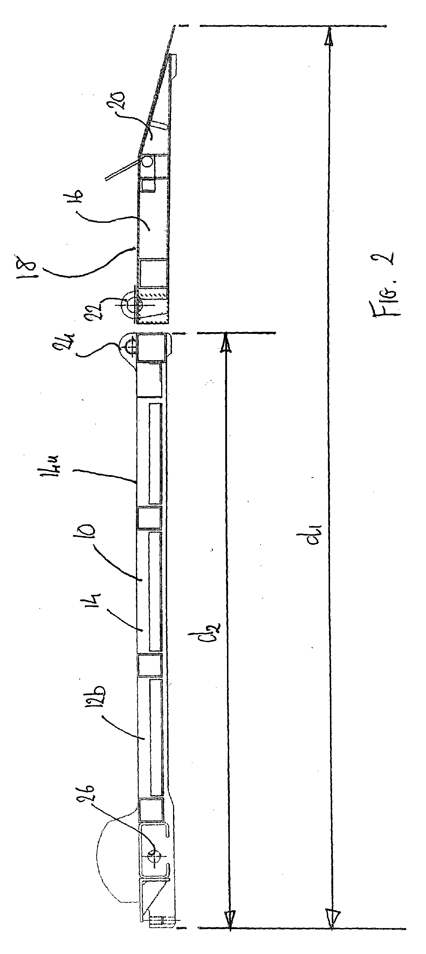

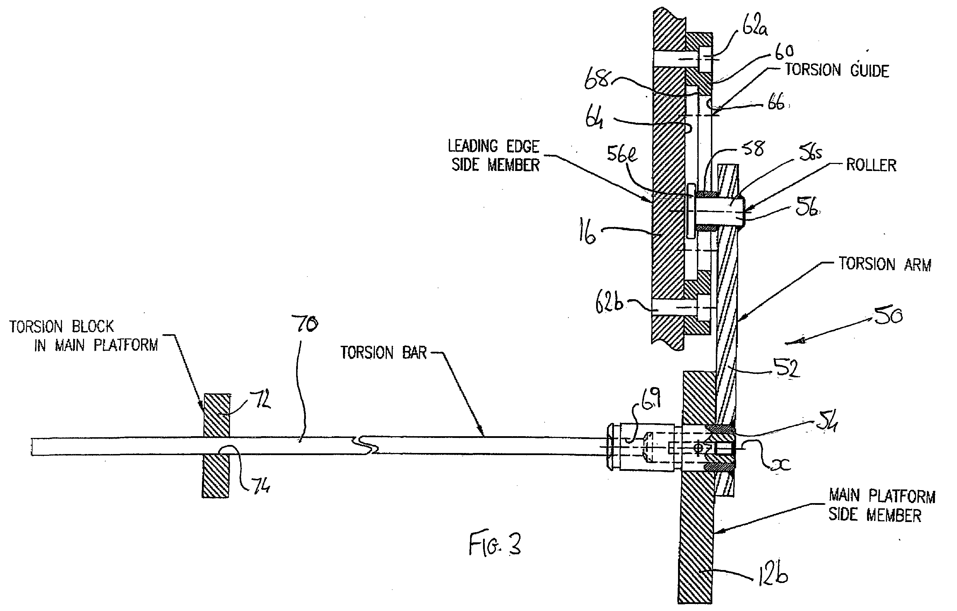

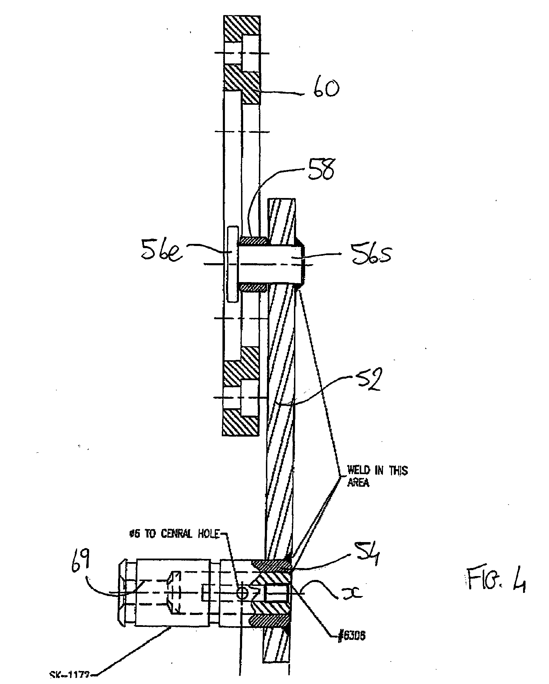

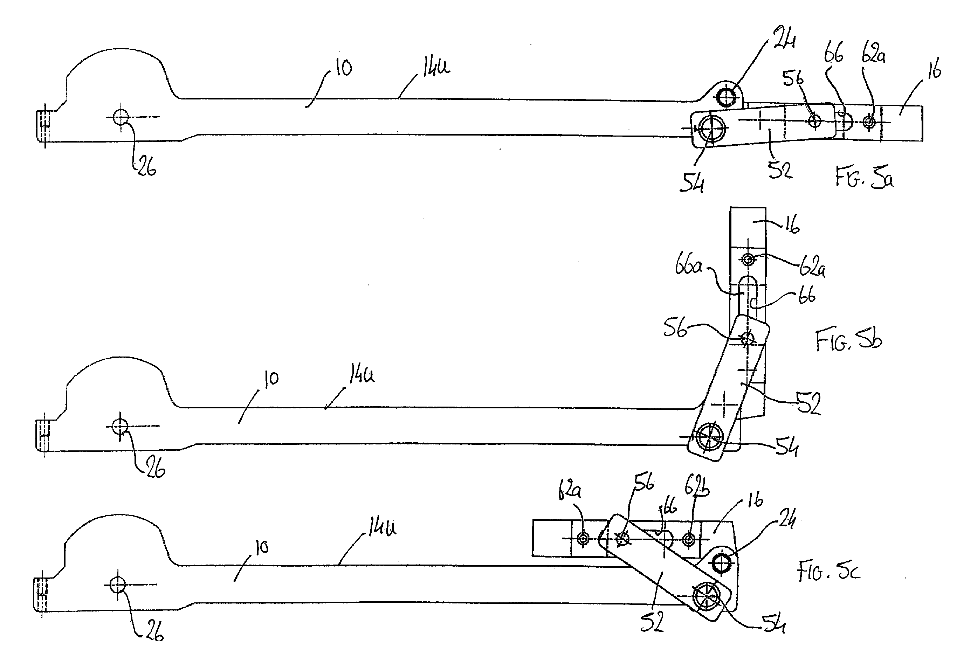

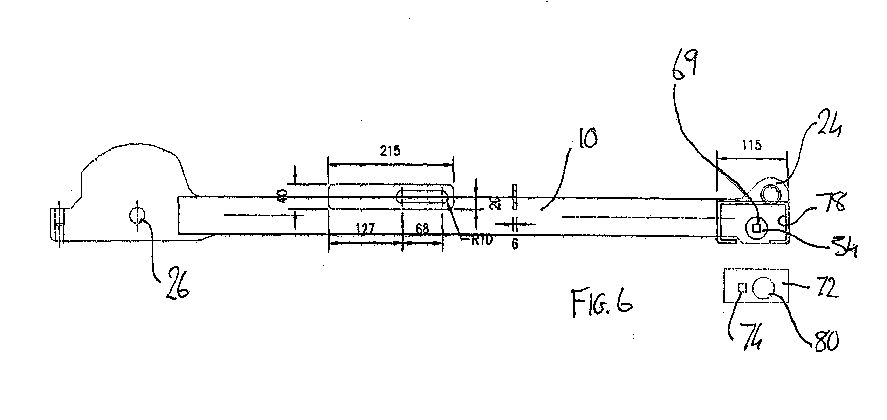

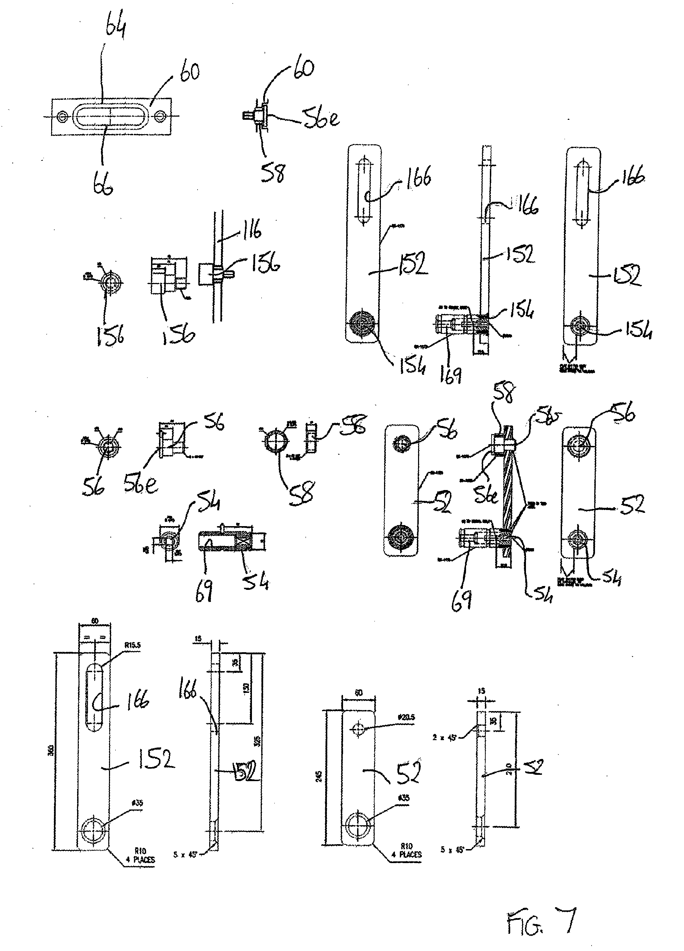

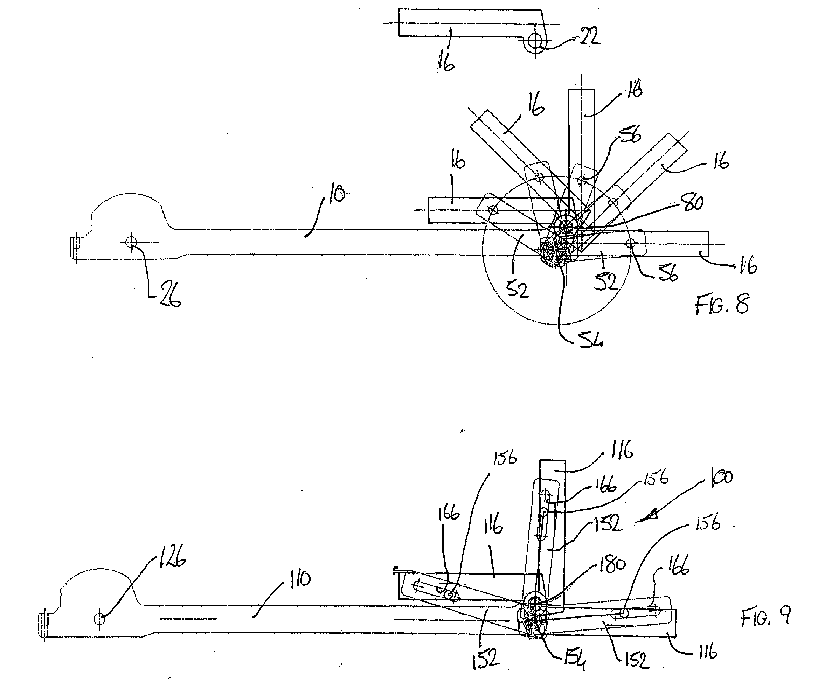

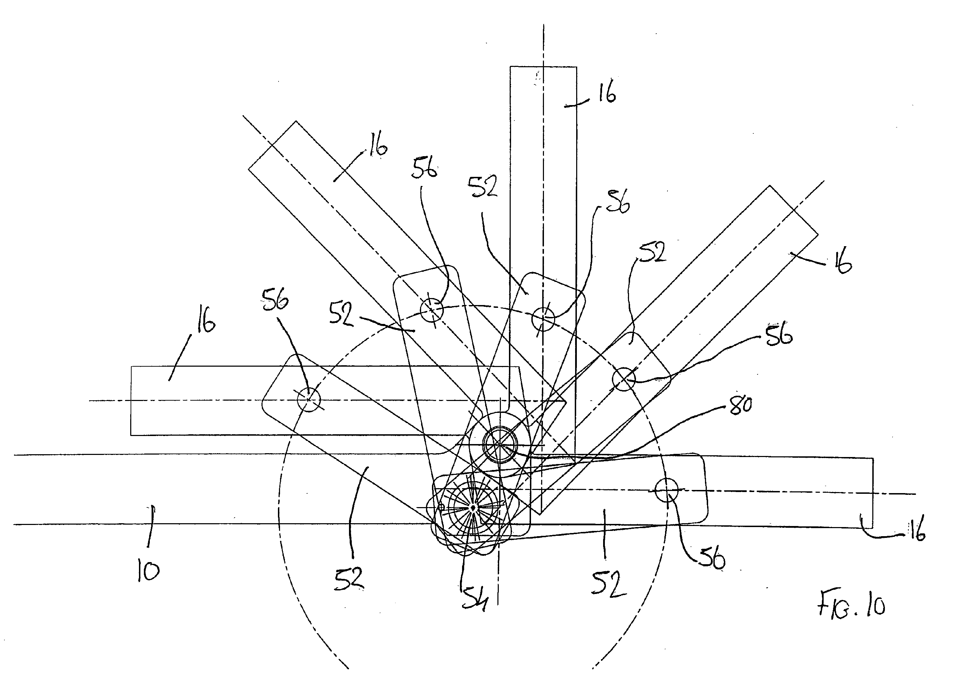

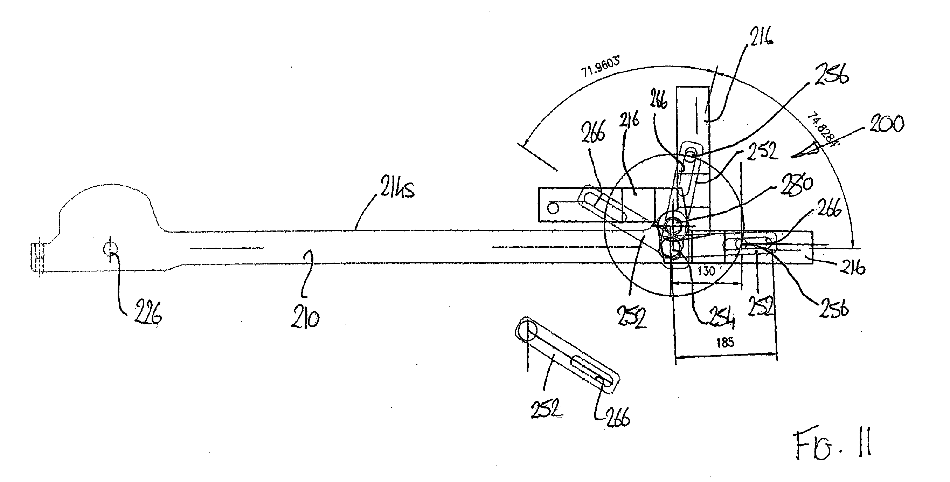

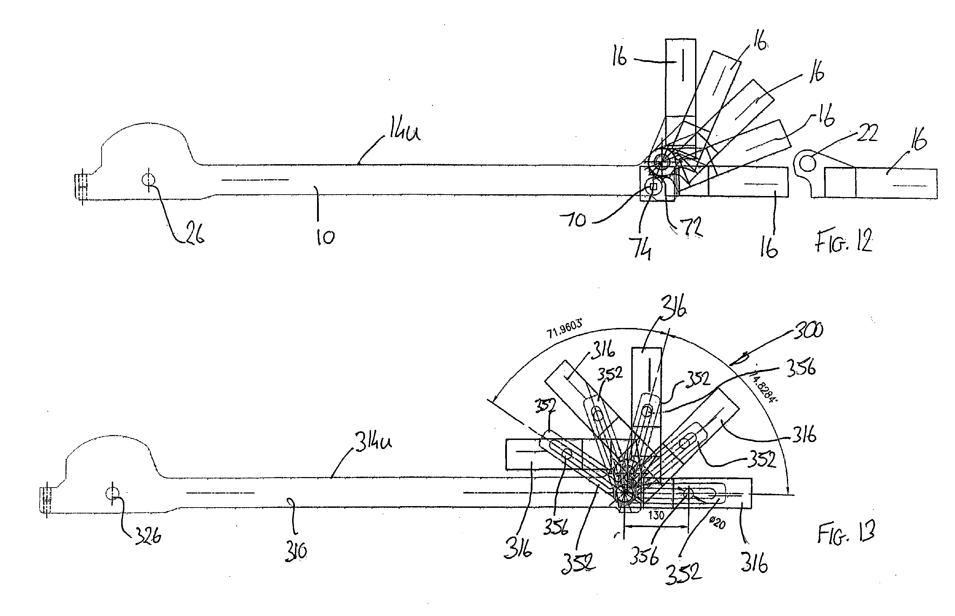

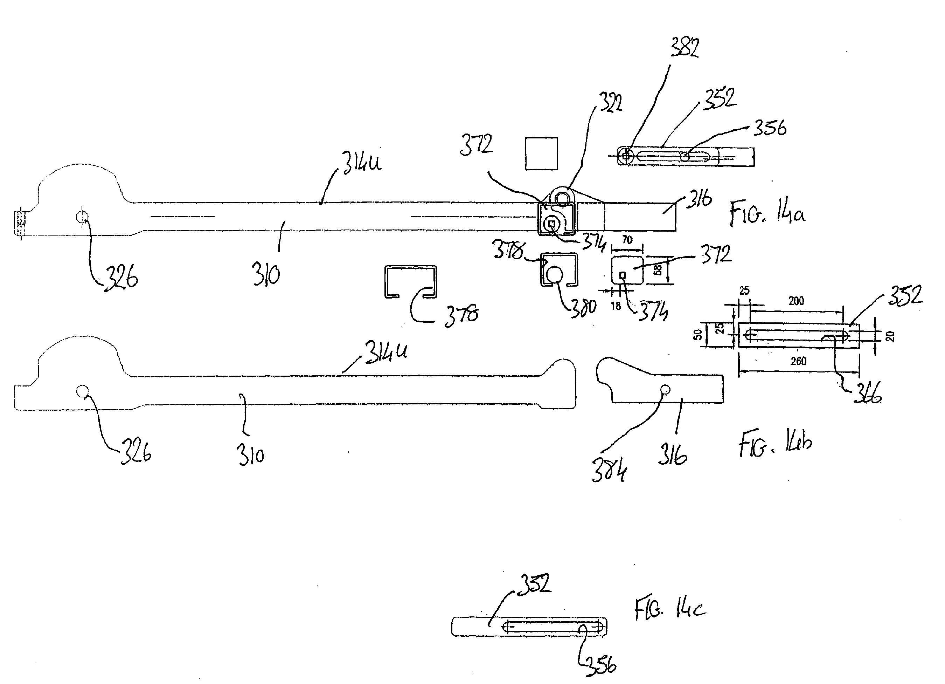

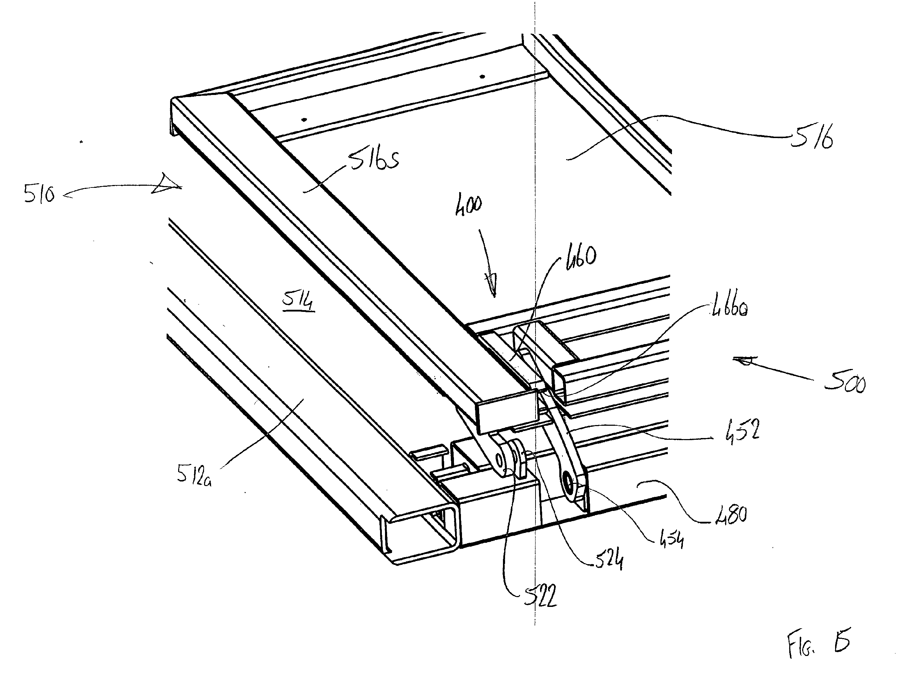

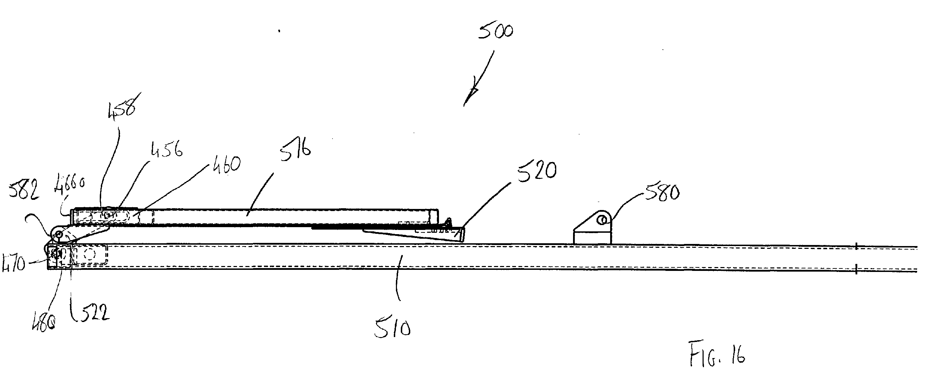

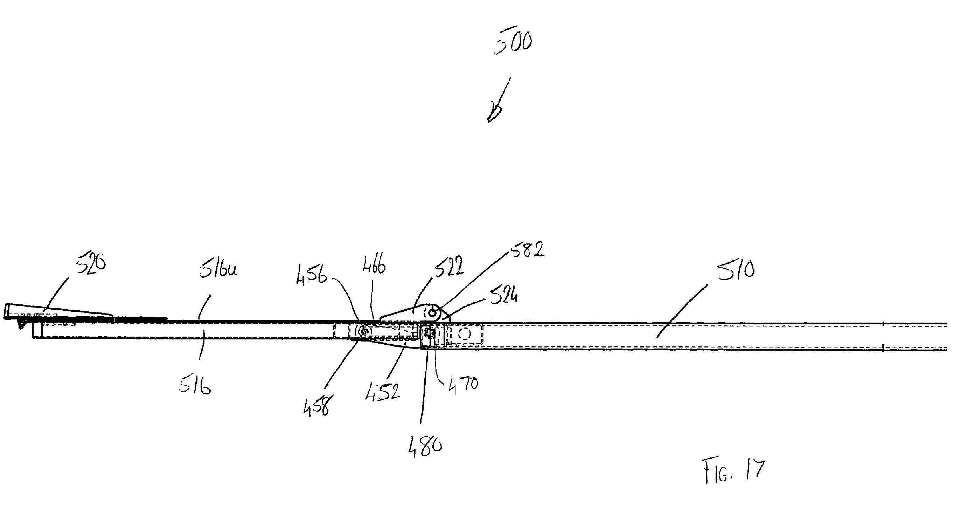

Referring to the drawings, Figs 1 and 2 show a platform 10 that forms part of a conventional tail lift apparatus that is typically attached to a rear of a vehicle. The platform 10 comprises two spaced-apart side members 12a, 12b with a plate 14 that spans between the members 12a, 12b. The plate 14 is typically the portion of the platform 10 on which goods or the like are located as they are being transferred between ground level and a bed of the vehicle or vice versa.

The platform 10 is provided with a pivotal portion 16 that has an upper surface 18 and a ramp portion 20 that leads up to the upper surface 18. The ramp portion 20 facilitates easy transfer of objects onto and off of the platform 10.

The pivotal portion 16 is provided with two eyelets 22 so that it can be hingedly attached to the platform 10, which is also provided with two eyelets 24, one on each side member 12a, 12b. A hinge pin or the like (not shown in Figs 1 and 2) is inserted through the eyelets 22, 24 to pivotally couple the platform 10 and the pivotal portion 16.

The side members 12a, 12b are provided with an aperture 26 (only one shown in Fig. 2) that facilitates pivotal coupling of the platform 10 to the vehicle. Conventional tail lift apparatus typically includes two spaced-apart columns (not shown) that are disposed on each side of an opening (e.g. a door) that allows access to the floor or bed of the vehicle. Runners (not shown) are slidably engaged with the columns and the side members 12a, 12b are typically pivotally attached at a lower end of the runners *via* a pivot pin or the like (not shown) located through apertures 26 and similar apertures in the runners. The runners slide up and down a face of the columns so that the platform 10 can be moved up and down, typically with the platform 10 in a horizontal configuration (as shown in Fig. 2) to function as a tail lift.

Vehicles provided with tail lifts are often loaded and unloaded at a raised loading bay or dock (not shown). The bay or dock is typically at a height that is substantially the same as the height of the floor or bed of the vehicle so that goods can be transferred to and from the floor or bed without the use of the tail lift.

The platform 10 is generally stored in a vertical configuration (not shown) when not in use, and typically rests against a rear face of the vehicle. In this configuration, the platform 10 at least partially obscures the opening that allows access to the floor or bed of the vehicle. The platform 10 is therefore generally lowered in its vertical configuration towards the ground to that it is moved clear of the opening to facilitate the transfer of goods.

However, it will be appreciated that a depth d₁ (Fig. 2) of the platform 10 (that is the overall vertical height of the platform when in its vertical configuration) may be greater than the height from the ground to the floor or bed of the vehicle. For example, the height of the floor or bed of the vehicle above ground level is typically in the order of 1 metre, which is generally the same as the height of the raised loading bay or dock above ground level. However, the depth d₁ of the platform 10 can be around 1.5 metres or more. Thus, even when the platform 10 is lowered in its vertical configuration, an upper portion thereof can partially obscure the opening to the floor or bed of the vehicle.

The pivotal portion 16 can be folded over (that is pivoted with respect to the platform 10) so that it rests against the platform 10 (see Fig. 5c). This reduces the overall depth of the platform 10 by approximately the depth of the pivotal portion 16 (e.g. 0.5 metres or so) to a reduced depth d₂. Depth d₂ is generally less than the height of the floor or bed of the vehicle above ground level, and thus the platform 10 no longer obscures the opening to the loadspace of the vehicle (e.g. the floor or bed). However, the pivotal portion 16 can weigh a considerable amount and is therefore very difficult to lift manually. Additionally, considerable force is required to be exerted by the user to lift the pivotal portion 16.

Referring to Figs 3 and 4, there is shown a biasing mechanism, generally designated 50, that aids in the lifting of the pivotal portion 16. Figs 3 and 4 show the biasing mechanism 50 attached to side member 12b, but it will be appreciated that a similar mechanism could also be attached to member 12a if required.

The biasing mechanism 50 includes a torsion arm 52 that is pivotally coupled at a first end to side member 12b using, for example, a pin 54. Pin 54 allows the torsion arm 52 to pivot or rotate about an axis x of the pin 54 whilst the side member 12b remains stationary. The other end of the torsion arm 52 is provided with a pin 56 having a roller bearing 58 attached thereto. Pin 56 has a shaft portion 56s and an enlarged diameter portion 56e. Bearing 58 is fitted around the shaft 56s.

A torsion guide 60 is attached (e.g. by bolts 62a, 62b) to a side member of the pivotal portion 16 (see Figs 5a to 5c). The torsion guide 60 is provided with a first slot 64 that has a width that is slightly greater than an outer diameter of the enlarged portion 56e of the pin 56, and a second slot 66 that has a width that is slightly greater than an outer diameter of the bearing 58. Thus, the enlarged diameter portion 56e of the pin 56 is retained in the first slot 64 as the reduced width of the second slot 66 produces a lip 68 that prevents the enlarged diameter portion 56e from being released from the first slot 64. Pin 56 can slide within the second slot 66 on roller bearing 58, as will be described.

Pin 54 that attaches the torsion arm 52 to the side member 12b of the platform 10 is provided with an aperture 69 that is of square cross-section. A first end of a torsion bar 70 that is also of square cross-section, is located in aperture 69. The second end of the torsion bar 70 is held rigidly by a bracket 72 that is provided with an aperture 74 that is also of square cross-section. It will be appreciated that the cross-sectional shape of the aperture 69, torsion bar 70 and aperture 74 may be circular, triangular or the like. The bracket 72 is typically located in a channel 78 (Fig. 6) underneath the plate 14 of the platform 10. The bracket 72 is slidably engaged in the channel 78 so that it can move towards and away from the pin 54, but rigidly holds the second end of the torsion bar 70. The torsion or bias force that can be applied by the torsion bar 70 can be varied by sliding the bracket 72 towards pin 54 to increase the torsion or bias force, and sliding the bracket 72 away from the pin 54 to decrease the torsion or bias force. The torsion bar 70 is also located in the channel 78. As shown in Fig. 6, bracket 72 can be provided with a larger aperture 80 that facilitates the passage of a second torsion bar (not shown) for a second biasing mechanism (not shown) that can be located on the other side member 12a of the platform 10 if required. Thus, the length of the torsion bar 70 need not be limited by the positioning of the bracket 72 in the channel 78, as the torsion bar 70 can overlap longitudinally a second torsion bar that is also located in channel 78.

Referring now to Figs 5a to 5c, there is shown the pivotal portion 16 being moved from an extended position (Fig. 5a) through a neutral position (Fig. 5b) to a folded position (Fig. 5c). Note that the ramp portion 20 of pivotal portion 16 has been omitted. When the platform 10, pivotal portion 16 and biasing mechanism 50 are assembled, the torsion bar 70 is located in aperture 69 of pin 54 with the pivotal portion 16 in the required neutral position (Fig. 5b). In this position, the pivotal portion 16 typically lies perpendicular to the platform 10 and there is no torsion or twist applied to the torsion bar 70, and thus a neutral bias is applied to the pivotal portion 16 when it is in the neutral position.

It is to be noted that the pivotal portion 16 need not necessarily be perpendicular to the platform 10 when in the neutral position. The neutral position is determined by the position of aperture 69 in the pin 54 relative to the torsion arm 52. Thus, the neutral position can be where the pivotal portion 16 is perpendicular to the platform 10, or towards the folded or extended positions. The neutral position can be chosen by selecting the position of the aperture 69 in the pin 54 relative to the torsion arm 52.

When the pivotal portion 16 is moved from the neutral position (Fig. 5b) to the extended position (Fig. 5a), as it would be during use of the platform 10 as a tail lift for example, torsion is applied to the torsion bar 70 as the pivotal portion 16 is folded downwards. The torsion bar 70 is twisted along its longitudinal axis as one end of the bar 70 rotates with the pin 54, whilst the other end is securely held in aperture 74 of bracket 72 and thus does not move. The torsion applied to the torsion bar 70 during movement of the pivotal portion 16 is effectively stored energy that tends to bias the pivotal portion 16 towards the neutral position. The weight of the pivotal portion 16 is typically enough to overcome this biasing force so that it remains in the extended position (Fig. 5a).

During movement of the pivotal portion 16 between the neutral and extended positions, the bearing 58 around pin 56 slides within the second slot 66 so that the torsion arm 52 retains a mechanical linkage between the pivotal portion 16 and the platform 10. Thus, the torsion arm 52 is used to transmit the torsion or bias force produced by twisting of the torsion bar 70 to the pivotal portion 16.

It will also be appreciated that the torsion bar 70 is located in channel 78 that is below the plate 14 of the platform 10. This is because the eyelets 22, 24 that are used to pivotally couple the pivotal portion 16 to the platform 10 are typically raised higher than the level of the plate 14 of the platform 10. The torsion bar 70 would therefore protrude above the level of the plate 14 if it were attached directly at these pivots, and this would likely obscure access to the platform 10. The torsion arm 52 allows the torsion bar 70 to be located underneath the platform 10 so that it does not obstruct access to the platform 10.

The length of the first slot 64 and the second slot 66 is chosen so that the pin 56 can move within the slots 64, 66 during the full range of motion of the pivotal portion 16 (as depicted in Figs 5a to 5c).

When the platform 10 is to be returned to its vertical configuration for storage, the pivotal portion 16 is lifted to the folded position (Fig. 5c) so that it lies parallel with an upper surface 14u of plate 14. However, as the pivotal portion 16 can weigh a considerable amount, it can be difficult to lift from the extended to the folded position *via* the neutral position and vice versa.

The bias provided by the torsion bar 70 effectively reduces the weight of the pivotal portion 16 by providing a biasing force that urges the pivotal portion 16 towards the neutral position, thus aiding the user in lifting it. Thus, it is much easier for the user to lift the pivotal portion 16 towards the neutral position because of the assistance of the stored torsion energy within torsion bar 70.

It will be appreciated that the amount of bias force, and thus the amount of assistance provided to the user, can be varied, typically by adjusting the length of the bar 70 between the fixed end at bracket 72 and the rotating end at pin 54. This can be done by sliding bracket 72 that holds one end of the torsion bar 70 rigidly towards and away from the pin 54. Sliding the bracket 72 towards the pin 54 increases the torsion or bias force as it effectively shortens the bar 70. Sliding the bracket 72 away from pin 54 decreases the torsion or bias force as it effectively increases the length of the torsion bar 70. It will be appreciated that the length of the bar 70 will remain constant and it is only the effective length (that is the length between the pin 54 and the bracket 72) that is varied. It will be appreciated that the torsion bar 70 could be replaced with a similar bar of shorter or longer length to vary the torsion or bias force. Also, varying the cross-sectional thickness and/or shape of the bar 70 will vary the strength of the bias force produced by twisting of the torsion bar 70.

It will also be appreciated that as the pivotal portion 16 approaches its neutral position, the amount of bias force provided by the torsion bar 70 will reduce as the torsion bar 70 untwists to its neutral position. However, this reduction in the bias force does not affect the user because the effective weight of the pivotal portion 16 will reduce as it pivots towards the neutral position.

When the pivotal portion 16 has been raised to its neutral position, it can then be lowered towards the folded position (Fig. 5c). As before, when the pivotal portion 16 is moved from the neutral position (Fig. 5b) to the folded position (Fig. 5c), torsion is applied to the torsion bar 70 as the pivotal portion 16 is folded downwards. The torsion applied to the torsion bar 70 aids the user in lowering the folded portion 16 because it reduces the effective weight of the pivotal portion 16. The torsion bar 70 is twisted along its longitudinal axis in the opposite direction, as one end of the bar 70 rotates with the pin 54, whilst the other end is securely held in aperture 74 of bracket 72 and thus does not move. The torsion applied to the torsion bar 70 during movement of the pivotal portion 16 again provides a stored energy that tends to bias the pivotal portion 16 towards the neutral position. The weight of the pivotal portion 16 is typically enough to overcome this biasing force so that it remains in the folded position (Fig. 5a).

As before, the bearing 58 around pin 56 slides within second slot 66 so that torsion arm 52 retains a mechanical linkage between the pivotal portion 16 and the platform 10 that transfers the torsion (i.e. the bias force) of torsion bar 70 to the pivotal portion 16.

Once the pivotal portion 16 is in the folded position, the platform 10 can be pivoted around its pivot pins (located in apertures 26) that pivotally couple the platform 10 to the runners of the tail lift, so that the platform 10 lies parallel to the rear of the vehicle. This is the storage position of the platform 10 when it is not in use and also when the vehicle is in transit.

It will be apparent that as the platform 10 is raised from its horizontal configuration to its vertical configuration, the bias force of torsion bar 70 will tend to move the pivotal portion 16 from its folded position towards its neutral position (in fact, the pivotal portion 16 would assume a generally horizontal attitude with the platform 10 in a vertical configuration due to the bias force of the torsion bar 70). The pivotal portion 16 and/or the platform 10 can be provided with a latching mechanism (not shown in the drawings) that can be used to retain the pivotal portion 16 in the folded position. The latching mechanism can be of any conventional type, and a simple embodiment may be a spring-loaded hook. Alternatively, one end 66a of second slot 66 could be provided with spring-loaded retaining jaws (not shown) that are normally biased to clamp around the bearing 58 so that they prevent the pin 56 from moving within second slot 66 when engaged. The jaws can be shaped so that they are parted by the bearing 58 as it moves through them and spring back under the bias of a spring or the like to lock around the bearing 58 when the pivotal portion 16 is in the folded position. A button, lever or the like can release the jaws so that the pivotal portion 16 can be moved from the folded position to the extended position.

It will be appreciated that the other end 66b of the second slot 66 may also be provided with a similar or other latching mechanism so that the pivotal portion 16 can be retained in the extended position.
However, this will generally not be required as the pivotal portion 16 will remain in the extended position due to gravity, providing that the bias force of the torsion bar 70 does not exceed the weight of the pivotal portion 16.

It will also be appreciated that the torsion applied to the torsion bar 70 when the pivotal portion 16 is in the folded position will assist the user in moving the pivotal portion 16 from the folded position to the extended position *via* the neutral position.

Fig. 7 shows a plurality of views of individual components of the biasing mechanism 50 of Figs 3 to 5 in more detail. Fig. 7 also shows components of alternative biasing mechanisms, as will be described.

Fig. 8 schematically shows the platform 10 with the pivotal portion 16 in various positions as it is being rotated about a pivot pin 80 that is passed through eyelets 22, 24 to pivotally couple the pivotal portion 16 to the platform 10. Fig. 10 shows an enlarged view of a portion of the platform 10 and pivotal portion 16 of Fig. 8 for clarity. The torsion guide 60 that is attached to the pivotal portion 16 has been omitted for clarity. Note that the ramp portion 20 of pivotal portion 16 has also been omitted.

Fig. 9 is a schematic side elevation that shows an alternative embodiment of biasing mechanism 100. Again, the ramp portion 120 of pivotal portion 116 has been omitted. Biasing mechanism 100 is similar to mechanism 50 of Figs 3 and 4, and like parts have been referenced with the same numeral prefixed "1". In this particular embodiment, the torsion arm 152 is provided with first and second slots 164 and 166 (shown as a single slot 166), and the pivotal portion 116 is provided with the pin 156 and the bearing 158 (not shown in Fig. 9) that engages slot 166.

The main difference between mechanism 50 and mechanism 100 is that the pin 156 is provided on the pivotal portion 116 and the first and second slots 164, 166 are provided on the torsion arm 152. The operation and function of the biasing mechanism 100 are substantially the same as that described above with reference to Figs 1 to 6. Some of the components of the biasing mechanism 100 are shown in Fig. 7.

Referring now to Fig. 11, there is shown a further alternative embodiment of a biasing mechanism 200. Note that the ramp portion 220 of pivotal portion 216 has been omitted. Biasing mechanism 200 is similar to mechanisms 50, 100, and like parts have been referenced with the same numeral prefixed "2". In this particular embodiment, the torsion arm 252 is provided with the first and second slots 264 and 266 (shown as a single slot 266). The pivotal portion 216 is provided with the pin 256 and the bearing 258 (not shown in Fig. 11) that engages the second slot 266.

The main difference between mechanism 200 and mechanism 100 is that the torsion arm 252 is provided with a slightly different shape of slot 266. Also, the pin 256 is provided at a different location on the pivotal portion 216. The slots 264, 266 are provided on the torsion arm 252. In this embodiment, the torsion arm 252 can be made shorter because of the positioning of the pin 256 on the pivotal portion 216. Thus, the torsion arm 252 does not protrude outwardly of the dimensions of the pivotal portion 216 as much as the torsion arm 152 of mechanism 100. This is because of the more central location of the pin 256 on the pivotal portion 216. The operation and function of the biasing mechanism 200 is substantially the same as those described above with reference to Figs 1 to 10. Fig. 11 shows the pivotal portion 216 in the extended, neutral and folded positions.

Fig. 12 shows a schematic side elevation of the pivotal portion 16 and the platform 10. The pivotal portion 16 is shown at various positions between the neutral position and the extended position. Fig. 12 also shows bracket 72 with aperture 74 that receives the torsion bar 70 located under the plate 14. Note that ramp portion 20 of pivotal portion 16 has been omitted in Fig. 12.

Fig. 13 shows a further alternative embodiment of a biasing mechanism 300. Note that the ramp portion 320 of pivotal portion 316 has been omitted. Biasing mechanism 300 is similar to mechanism 50 and in particular mechanisms 100, 200. Like parts have been referenced with the same numeral prefixed "3". In this particular embodiment, the torsion arm 352 is provided with elongated first and second slots 364 and 366 (shown as a single slot 366). As with mechanisms 100, 200, the pivotal portion 316 is provided with the pin 356 and the bearing 358 (not shown in Fig. 13) that engages slot 366.

The main difference between mechanism 300 and mechanisms 100, 200 is the elongation of the first and second slots 364, 366 in the torsion arm 352. This provides for a larger range of movement of the pivotal portion 316. The operation and function of the biasing mechanism 300 is substantially the same as that described above with reference to Figs 1 to 12. Fig. 13 shows the pivotal portion 316 in the extended, neutral and folded positions, and also in positions between these.

Figs 14a to 14c show components of the biasing mechanism 300 of Fig. 13. Fig. 14a shows the channel 378 that is provided under the plate 314 of the platform 310 in which bracket 372 is located and can slide. Fig. 14a also shows the torsion arm 352 that is provided with a square aperture 382 so that it can be coupled to the torsion bar 370 (not shown in Figs 14 to 14c) more securely.

Fig. 14b shows an aperture 384 in the pivotal portion 316 in which the pin 356 is located.

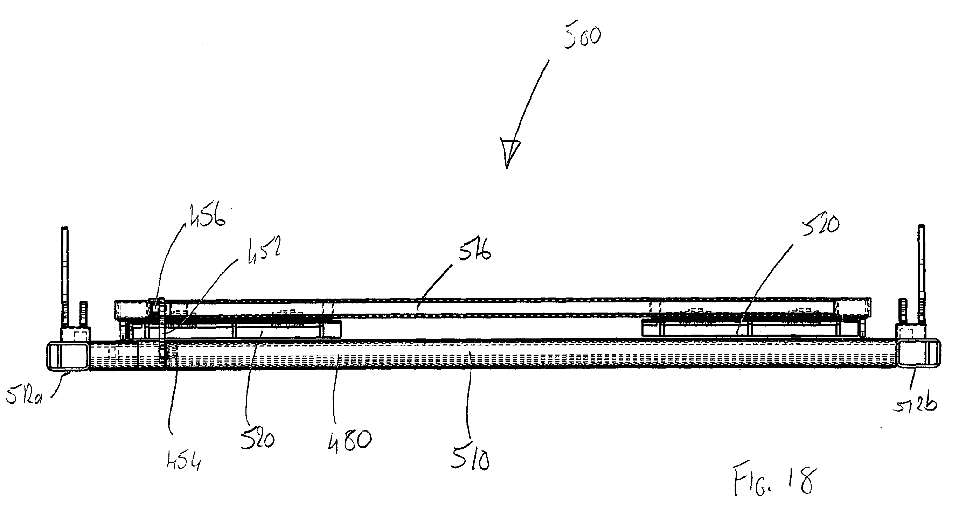

Referring now to Figs 15 to 18, there is shown an exemplary embodiment of a car lift 500 that is provided with a further alternative embodiment of a biasing mechanism 400. The biasing mechanism 400 is similar to mechanisms 50, 100, 200, 300, but the location of it on the platform 510 has been changed. Like parts have been referenced with the same numeral prefixed "4".

The car lift 500 shown in Figs 15 to 18 is larger than the tail lifts in the previous embodiments, and is intended to be used for transferring cars or other vehicles (e.g. racing cars) from the ground to the bed of a vehicle (not shown) and vice versa. It will be appreciated that the platform 510 is larger than that of the previous embodiments (generally 3 metres long or more). The pivotal portion 516 can be a single or double pivotal portion, and the embodiment shown is of a double folding type where the ramp portion 520 folds onto the pivotal portion 516 that in turn folds onto the main platform 510 (see Fig. 16). The main platform 510 typically has a length of around 1.5 metres or more.

The platform 510 of the car lift 500 is provided with two eyelets 580 (only one shown in Fig. 16) to each of which is attached a closing cylinder (not shown) that can be used to lift the platform 510 from its horizontal configuration to its vertical configuration, and also to lower it to the horizontal configuration from the vertical configuration.

As with previous embodiments, the pivotal portion 516 is provided with eyelets 522 so that it can be hingedly attached to the platform 510 (also provided with eyelets 524 on the side members 512a, 512b). A hinge pin 582 is inserted through the eyelets 522, 524 to pivotally couple the platform 510 and the pivotal portion 516.

With this particular embodiment, the biasing mechanism 400 is located inwardly of the side members 512a, 512b instead of attached to an outer edge thereof. This provides advantages over the other embodiments. The configuration and positioning of the biasing mechanism 400 allows for a seal around the opening (e.g. door) of the vehicle to seal against the outer edges of the side members 512a, 512b. Thus, the car lift 500 is sealed to the vehicle. Additionally, the outer dimensions of the platform 510 are not increased by the addition of the biasing mechanism 400, as with previous embodiments.

The biasing mechanism 400 includes the torsion arm 452 that is pivotally coupled at a first end to a cross bar 480 by the pin 454 that allows the torsion arm 452 to pivot or rotate about an axis of the pin 454 whilst the cross bar 480 remains stationary. The cross bar 480 is cut and a gap is left to allow for attachment, removal and pivotal movement of the torsion arm 452. The gap in the cross bar 480 can be strengthened by use of a reinforcing bar that can be welded to an inside face of the bar 480 across the gap. The torsion bar 470 is generally located within the cross bar 480, and the bracket 472 (not shown) that is used to hold one end of the bar rigidly can also be located in this slot. The cross bar 480 can be provided with a longitudinal slot that allows for the position of the bracket 572 within the bar 480 to be moved so as to vary the torsion applied to the bar 470, as with previous embodiments.

A second end of the torsion arm 452 is provided with a pin 456 that is similar to pin 56 and has a roller bearing 458 attached thereto. The torsion guide 460 in this embodiment is attached to one of the side members of the pivotal portion 516s.

The torsion guide 460 in this embodiment is provided with the first and second slots 464, 466, but in this case, the slots 464, 466 have an open end, designated 4660. The open end 4660 of the slots 464, 466 allows the pivotal portion 516 to be detached from the platform 510 by disengaging the hinge pin 582 from the eyelets 522, 524 and pulling the pivotal portion 516 away from the platform 510. This is advantageous for maintenance and repair of the car lift 500 and/or the biasing mechanism 400.

An upper plate 516u of the pivotal portion 516 on which a portion of the car (or other vehicle) that is being lifted is provided with a slot (not shown) in which the torsion arm 452 is located. When the pivotal portion 516 is in use, the slot makes no substantial difference to the useable surface area of the portion 516.

The operation and function of the biasing mechanism 400 are the same as those of previous embodiments.

The biasing mechanism of the present invention provides numerous advantages. In particular, the biasing mechanism of certain embodiments facilitates easy lifting of the pivotal portion of the platform that would otherwise be difficult to lift because of the weight of the pivotal portion. Certain embodiments of the mechanism itself are relatively simple and do not involve any complex engineering or design. Also, certain embodiments allow the bias force of the mechanism to be easily adjusted.

Modifications and improvements may be made to the foregoing without departing from the scope of the present invention. In particular, the biasing mechanism has been described with reference to a tail lift apparatus, but it will be appreciated that the mechanism will be useful in other areas where bulky, heavy or awkward hinged pieces are required to be lifted.

## Claims

1. A biasing mechanism for a hinge that pivotally couples two members, the biasing mechanism comprising a bias means that can be energised upon relative movement between the members, the biasing mechanism including an arm that transfers a bias force of the bias means to one of the members.

2. A mechanism according to claim 1, wherein the bias means comprises a torsion bar.

3. A mechanism according to claim 1 or claim 2, wherein the biasing mechanism includes a guide pin moveable in a slot.

4. A mechanism according to claim 3, wherein the pin is provided on the arm and the slot is provided in one of the members.

5. A mechanism according to claim 4, wherein the slot is narrowed to retain a portion of the pin.

6. A mechanism according to any preceding claim, wherein the arm is pivotally coupled to one of the members.

7. A mechanism according to any preceding claim, wherein the bias force can be varied.

8. Lifting apparatus including a platform, the platform comprising two members pivotally coupled together *via* a hinge, the apparatus including a biasing mechanism according to any preceding claim.

9. Lifting apparatus including a platform, the platform having a pivotal portion that is pivotally coupled to the platform *via* a hinge, the apparatus including a biasing mechanism comprising an arm that transmits a bias force between the platform and the pivotal portion.

10. Apparatus according to claim 9, wherein the arm transfers the bias force to the pivotal portion.

11. Apparatus according to claim 9 or claim 10, wherein the bias mechanism includes a bias means that can be energised upon relative movement between the pivotal portion and the platform.

12. Apparatus according to any one of claims 9 to 11, wherein the bias means comprises a torsion bar.

13. Apparatus according to any one of claims 9 to 12, wherein the biasing mechanism includes a guide pin moveable in a slot.

14. Apparatus according to claim 13, wherein the pin is provided on the arm and the guide slot is provided in one of the members.

15. Apparatus according to claim 14, wherein the guide slot includes a retaining slot that lies along the same axis, the retaining slot being superimposed on the guide slot.

16. Apparatus according to any one of claims 9 to 15, wherein the arm is pivotally coupled to one of the platform and the pivotal portion.

17. Apparatus according to any one of claims 9 to 16, wherein the bias force can be varied.
